**Europäisches Patentamt**

(19) **European Patent Office**

**Office européen des brevets**

(11) Publication number: **0 182 395**
**B1**

(12) **EUROPEAN PATENT SPECIFICATION**

(45) Date of publication of patent specification: **23.05.90**   (51) Int. Cl.⁵: **H 04 N 5/232, G 03 B 3/10**

(21) Application number: **85201427.3**

(22) Date of filing: **10.09.85**

(54) **Camera for recording television, photographic or cinematographic images, comprising an automatic focusing device.**

(30) Priority: **14.09.84 NL 8402827**
**06.06.85 NL 8501634**

(43) Date of publication of application:
**28.05.86 Bulletin 86/22**

(45) Publication of the grant of the patent:
**23.05.90 Bulletin 90/21**

(84) Designated Contracting States:
**AT BE CH DE FR GB IT LI NL SE**

(56) References cited:
**DE-A-3 240 033**
**US-A-3 824 337**
**US-A-4 329 577**
**US-A-4 381 523**

(73) Proprietor: **N.V. Philips' Gloeilampenfabrieken**
**Groenewoudseweg 1**
**NL-5621 BA Eindhoven (NL)**

(72) Inventor: **Theuwissen, Albert Joseph Pierre**
**c/o INT. OCTROOIBUREAU B.V. Prof.Holstlaan 6**
**NL-5656 AA Eindhoven (NL)**
Inventor: **Izushi, Munehisa**
**c/o INT. OCTROOIBUREAU B.V. Prof.Holstlaan 6**
**NL-5656 AA Eindhoven (NL)**
Inventor: **Jaspers, Cornelis Antonie Maria**
**c/o INT. OCTROOIBUREAU B.V. Prof.Holstlaan 6**
**NL-5656 AA Eindhoven (NL)**
Inventor: **Van de Steeg, Martins Johannes**
**Henricus**
**c/o INT. OCTROOIBUREAU B.V. Prof.Holstlaan 6**
**NL-5656 AA Eindhoven (NL)**
Inventor: **Vermeulen, Arend Jan Wilhelmus**
**Abraham**
**c/o INT. OCTROOIBUREAU B.V. Prof.Holstlaan 6**
**NL-5656 AA Eindhoven (NL)**

(74) Representative: **Kooiman, Josephus Johannes**
**Antonius et al**
**INTERNATIONAAL OCTROOIBUREAU B.V. Prof.**
**Holstlaan 6**
**NL-5656 AA Eindhoven (NL)**

## EP 0 182 395 B1

**Description**

The invention relates to a signal process in a camera for recording television, photographic or cinematographic images, comprising an automatic focusing device, in the process an image of a scene to be recorded being obtained on an opto-electronic sensor *via* an optical lens system, an optical partial blocking device being provided at this lens system for partly blocking an optical path in the lens system, this blocking action being effected on first and second portions of the optical path, which portions are situated in substantially mutually opposite positions on either side of a central axis of the optical path, the camera comprising a signal comparison circuit for comparing the signals supplied by the sensor from an output and generated in first and second partial blocking periods during blocking of the respective first and second optical path portions, the focusing device providing a substantially optimum focusing position depending on the result of the comparison.

Such a signal process and camera are disclosed in the United States Patent US—A—4,381,523. By partially blocking the optical path two images are obtained *via* different portions of the optical lens system. When focusing is at an optimum, the two images are optimally in registration. A non-optimum focusing position results in images which are shifted relative to each other, the direction of the shift depending on over or underfocusing. During the signal comparison operation the fact that the two images are shifted relative to each other is shown by a non-optimum signal correlation and to obtain an optimum signal correlation the focusing position is adjusted in the correct direction.

The described camera comprises a separate sensor for effecting the automatic focusing operation or a single scene sensor having a specially dedicated (space) portion therefor.

The invention has for its object to provide a camera which does not have a separate sensor or sensor portion for the automatic focusing operation, but in which the normal scene pick-up device is also used for the automatic focusing operation without disturbing the scene recording. According to the invention, the signal process is therefore characterized in that during the duration of a first and a second television field period, the process involves during each field period a cycle with a scene pick-up period, a scene information-transfer period for the transfer of information between a sensor pick-up member and a sensor storage member, at least one pick-up period equal to the first or second partial blocking period, respectively and at least one blocking information-transfer period for the transfer of information between the pick-up member and the storage member, or during the duration of a television field period the process involves a cycle which contains a scene pick-up period, a scene information-transfer period for the transfer of information between the pick-up member and the storage member, a first pick-up period equal to the first partial blocking period, a first blocking information-transfer period for the transfer of information between the pick-up member and the storage member, a second pick-up period equal to the second partial blocking period and a second blocking information-transfer period for the transfer of information between the pick-up member and the storage member.

The invention is based on the recognition that because of the use of the above cycle in the described charge transfer device which acts as a scene pick-up device, both a normal recording of the scene and an automatic focusing can be obtained.

During the blocking information-transfer period, a desired adding-up of the information is realized in a simple way in desired brief first and second pick-up periods for a camera for carrying out the process, said camera for recording television, photographic or cinemato-graphic images, comprising an automatic focusing device, in the camera an image of a scene to be recorded being obtained on an opto-electronic sensor *via* an optical lens system, an optical partial blocking device being provided at this lens system for partly blocking an optical path in the lens system, this blocking action being effected on first and second portions of the optical path, which portions are situated in substantially mutually opposite positions on either side of a central axis of the optical path, the camera comprising a signal comparison circuit for comparing the signal supplied by the sensor from an output and generated in first and second partial blocking periods during blocking of the respective first and second optical path portions, the focusing device providing a substantially optimum focusing position depending on the result of the comparison, characterized in that the opto electronic sensor is in the form of a charge transfer device which is suitable for television and comprises a pick-up member, an information storage member and a parallel-in, series-out shift register member connected to the sensor output terminal, and in that in the camera, which comprises a time signal generator for supplying from several outputs different clock pulses for the transfer of information in and between the members of the sensor, the pick-up member and the storage member are coupled to different clock pulse outputs during the blocking information-transfer periods, the clock pulse frequency for the transfer of information in the pick-up member being a factor of some dozens higher than the clock pulse frequency for the transfer in the storage member and the transfer of information between the pick-up member and the storage member is effected under the control of the clock pulses for the information transfer in the storage member.

A further embodiment of the camera, with which a for practical purposes adequately strong partial blocking information is obtained by adding together the information components, is characterized in that the product of the said frequency factor and the duration of the first and second pick-up periods, respectively is in the order of magnitude of the scene pick-up period. In this situation, the intensity of the

2

partial blocking information is approximately half the intensity of the scene information if the partial blocking action covers approximately half the diameter of the optical path.

A camera embodiment in which the signal supply to the signal comparison circuit is effected without the signals which correspond to the scene being influenced, is characterized in that the output terminal output of the sensor is coupled to an input of a change-over device having first and second outputs, the first output being coupled to a signal terminal of the camera and the second output being coupled to an input of the signal comparison circuit in the camera, the first and second outputs, respectively being connected in the change-over device to the input during predominantly television field scanning periods and during field blanking periods, respectively.

The invention will now be described in greater detail by way of example with reference to the accompanying drawings, in which

Figure 1 shows block-schematically an embodiment of a camera according to the invention,

Figure 2 shows, to illustrate the invention some diagrams as a function of the time, and

Figure 3 shows to explain the operation of the camera of Figure 1 a survey as a function of the time of the information processing operation in the storage member of a charge transfer device provided as an opto-electronic sensor in the camera.

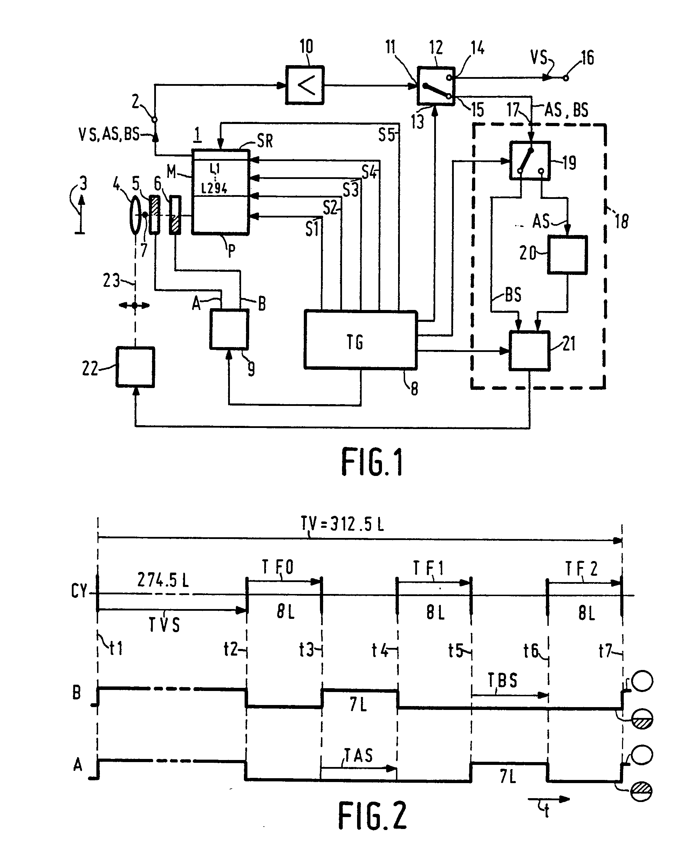

In a camera according to the invention, which is shown block-schematically in Figure 1, reference numeral 1 denotes an opto-electronic sensor which, as is illustrated by means of a block circuit diagram, is in the form of a charge transfer device, more specifically as what is commonly denoted as a frame transfer device (FTD). The sensor 1 is in the form of an integrated circuit comprising a pick-up member P, an adjacent information storage member M, which is shielded from light, and adjacent thereto, a parallel-in series-out shift register member SR, which is also shielded from light. The construction and the operation under the control of clock pulse signals to be applied is described in detail in the United States Patent No. 3,824,337, which is included here by reference. The pick-up member P and the storage member M are constructed from pick-up and storage elements, respectively which are arranged in rows and columns, a charge transfer occurring periodically in the column direction in the members P and M and between them. In Figure 1, L1...L294 in the storage member M denotes that it is assumed to comprise 294 rows of storage elements, which corresponds to 294 television lines. The pick-up member P is also of a construction having 294 rows of pick-up elements. Instead of providing the row of storage elements L1 in the storage member M it is alternatively possible to use the shift register member SR for that purpose as described in said Patent. The shift register member SR may comprise a plurality of shift registers in combination with colour stripe filters in front of the pick-up member P.

Instead of the described construction of the sensor 1 with the adjacent members P, M and SR, a storage member M arranged in the integrated circuit under the pick-up member P may be used instead. In this situation, it should be ensured that light incident on the pick-up member P does not reach the storage member M and the shift register member SR. The charge transfer from the pick-up member P to the storage member M can now be effected directly from each pick-up element to the subjacent storage element, whereafter the charge transfer can be effected in the column direction in the storage member M to the shift register member SR. It should be noted that no charge transfer between the pick-up elements in the column direction is then required. In the case in which this feature is indeed present, it will become apparent from the further course of the description that such a situation has its advantages.

A further example of the construction of the sensor 1 is that in which the shift register SR is in the form of the base of a comb which is shielded from light and whose teeth constitute the storage member M. The pick-up elements of the pick-up member P are arranged in columns between the teeth of the storage member M. In this example the pick-up elements may also have a direct charge transfer to the adjacent, associated storage elements. A sensor having such a construction is sometimes designated as an inter-line transfer device. If also here it is possible to transfer charge between the pick-up elements of the columns of the pick-up member P this will have apparent advantages.

For simplicity of description of the camera shown in Figure 1, the description will be based on the construction of the sensor 1 in the form of the frame transfer device shown. To control the sensor 1 it receives clock pulse signals denoted by S1, S2 to S5, which causes an output terminal 2 of the sensor 1, which is coupled to the output of the shift register member SR to carry a periodical signal sequence VS, AS, BS shown next to it. For the sake of simplicity, supply voltages for the sensor 1 and for further components in the camera of Figure 1 are not shown. The signal VS is associated with scene information to be displayed, the signals AS and BS being associated with respective first and second partially blocking information components. The scene information to be displayed, contained in the signal VS originates from a scene which is shown as an arrow and is denoted by 3. Light coming from the scene 3 is projected onto the pick-up member P of the sensor 1 via a lens system 4, which for the sake of simplicity is shown as a single lens, and an optical (partial) blocking device (5, 6). In Figure 1 the device (5, 6) is shown as having two shutters 5 and 6. The shutters 5 and 6 may be in the form of rotating disc shutters or as electronically controlled shutters which comprise, for example, liquid crystals. Depending on a voltage to be applied across the crystal, the crystal transmits or blocks light. In Figure 1, the hatched parts of the shutters 5 and 6 show schematically that they can each effect a partial blocking operation. A portion of an optical path is then blocked. Reference numeral 7 denotes the central axis of the optical path. The drawing shows that the shutters 5 and 6 block optical path portions which are situated in a more or less mutually opposite position on either side of the central axis 7 of the optical path. These optical path portions may be either an upper and a lower path portion or a left-hand and a right-hand path portion. In the event in which the partial blocking includes approximately half the diameter of the optical path (7), the strongest possible partial blocking information is obtained. Let it be assumed that the blocking device (5, 6) is also capable of completely blocking the light, which will have its advantages, but is however not necessary.

When a scene is recorded, the light originating from the scene 3 results in the scene forming an image on the pick-up member P of the sensor 1. During a scene recording period the photons of the incident light produce an electric charge integration in each of the pick-up elements of the pick-up member P. The pick-up period is identical to a light integration period. To process the scene information obtained by integration or accumulation in the pick-up member P, the clock pulse signals S1 to S5 are supplied by a time signal generator (TG) denoted by 8. For a detailed construction of the different clock pulse signals reference is made to said United States Patent No. 3,824,337. To emphasize a control of the sensor 1, which in accordance with one aspect of the present invention is effected differently, compared with the control described in said Patent, the clock pulse signals for the control of the charge transfer in the members P, M and SR (signals S1, S3 and S5) and between the members P and M, M and SR (signals S2, S4) are shown separately.

In addition to the clock pulse signals S1 to S5 the time signal generator 8 applies further control signals, not indicated further, to other components of the camera shown in Figure 1. Thus, the generator 8 applies a control signal to a control device 9 *via* which the blocking device (5, 6, 9) thus formed is operated in synchronism with the sensor 1 *via* the generator 8. In this situation it is assumed, by way of example, that the optical blocking arrangement (5, 6, 9) is operated by essentially partial blocking and, optionally, total blocking. Figure 1 shows that the arrangement 9 applies a signal A or B to the respective shutters 5 and 6, Figure 2 showing associated signal diagrams A and B as a function of the time t.

The sensor output terminal 2 carrying the signal sequence VS, AS, BS is connected to an input 11 of a changeover device 12 *via*, for example, a preamplifier 10. Further amplifiers arranged in the camera and further signal processing circuits are not shown for the sake of simplicity. The generator 8 applies a control signal to a control input 13 of the device 12, in response to which a first output 14 thereof supplies the signal VS and a second output 15 the signal sequence AS, BS. The signal VS which represents the scene information to be displayed is supplied from an output terminal 16 of the camera shown in Figure 1. In the case in which the signal VS, after having been submitted to further signal processing operations which are customary in television, is used for television reproduction, the camera shown in Figure 1 operates as a television camera. Another possibility is to process the signal VS into a signal suitable for cine film reproduction, so that the camera shown in Figure 1 forms part of a cine film camera as a pick-up member. A further possibility is to process the signal VS to form a photograph or a slide, so that the camera of Figure 1 forms part of a photographic camera, as its pick-up member. Independent of the specific camera construction, the camera shown in Figure 1 may be operative for black-white or colour television. When operating as a colour television camera a plurality of sensors 1 may be present.

The output 15 of the change-over device 12 with the signal sequence AS, BS is coupled to an input 17 of a signal comparison circuit 18. The circuit 18 comprises a change-over device 19 having two outputs which are coupled directly or *via* a delay device 20 to inputs of a signal comparator 21. The generator 8 applies a control signal to the change-over device 19, in response to which the signal AS from the signal sequence AS, BS is applied to the delay device 20 and the signal BS to the signal comparator 21. The originally sequential signals AS and BS are compared to each other, now as simultaneous signals, in the signal comparator 21. The result of this comparison, which depends on the extent to which there is signal correlation, is applied by the comparator 21, under the control of the generator 8, to a focusing device 22, which has a coupling 23 to the lens system 4. Depending on the result of the comparison, the device 22 changes the focusing position at the lens system 4 until any over or underfocusing, respectively is adjusted to the substantially optimum focusing position. The control is shown schematically in Figure 1 by means of two oppositely directed arrows at the coupling 23 between the lens system 4 and the device 22.

The camera shown in Figure 1 is operative in known manner with the signal comparison circuit 18 and the focusing device 22, which together constitute an automatic focusing device (18, 22) for the lens system 4. According to the invention, for a given mode of operation of the optical partial blocking arrangement (5, 6, 9) and when the described charge transfer device is used for the sensor 1, a camera is realized in which, without mutually influencing each other, both a normal scene recording and an automatic focusing action is obtained.

The diagram shown in Figure 2 to illustrate the invention, represent a cycle CY for the operation of the camera shown in Figure 1 and the signals A and B for the shutters 5 and 6 of the blocking arrangement (5, 6, 9). At the signal diagrams A and B of Figure 2 the states of the optical path are illustrated by means of circles. Plain circles are associated with an unblocked optical path and half hatched circles are associated with the partially blocked optical path. It will be obvious that a partially blocking operation at simultaneously the signal A and B result in a total blocking. TAS in the signal diagram A denotes a period of time in which only the shutter 5 in the optical path with the centre axis 7 is subjected to the partial blocking operation. TBS in the signal diagram B denotes a period of time in which only the shutter 6 in the optical path (7) is submitted to the partial blocking operation. The first partial blocking period TAS and the subsequent, second partial blocking period TBS are then equal to a first and second recording period, respectively at the sensor 1.

TV in the cycle diagram CY of Figure 2 denotes a television field period. It is indicated that TV=312.5 L, which implies that 312.5 television lines occur in the field period. Let it be assumed that the camera shown in Figure 1 is operative in accordance with a television system having a single interlaced 625-line standard, it holding that TV=20 ms for a field frequency of 50 Hz. For the 525-line standard it would hold that TV=262.5 L and TV=16.683 ms for a field frequency of 59.94 Hz. For the television lines L a line period equal to 64 and 63.556 µs, respectively and a line frequency of 16525 and 15734 Hz, respectively follow. Instead of the interlaced television standards described, a different, non-interlaced television system may alternatively be used to equal advantage.

In the drawing the cycle diagram CY is shown with six specific, contiguous periods. These periods need not to be contiguous. The first period in the cycle diagram CY is designated by TVS, the period being a scene pick-up period. During the scene pick-up period TVS the sensor 1 integrates the light incident on the pick-up member P and originating from the scene 3 to be televised to form an accumulated charge. From the signal diagrams A and B it will be obvious that then the optical path (7) is not blocked. The beginning and end, respectively of the light integration is denoted by the respective instants t1 and t2. The scene pick-up period TVS is followed by a scene information-transfer period TFO for the transfer of the information between the pick-up member P and the storage member M of the sensor 1 of Figure 1. This transfer of information is effected in known manner under the control of clock pulse signals S1, S2 and S3, which are then identical. The scene information-transfer period TFO which, by way of example, has a duration of eight line periods ends at an instant t3, it then following from the signal diagrams A and B that the optical path (7) is totally blocked. This blocking action prevents a what is commonly denoted as a smear signal from being generated by the pick-up member P, which would indeed be the case when the light integration in the pick-up member P would continue during the transfer period TFO=8 L. If smear signal generation is accepted and is optionally compensated for, for example by a subsequent electronic signal processing operation, this total optical blocking action may be omitted.

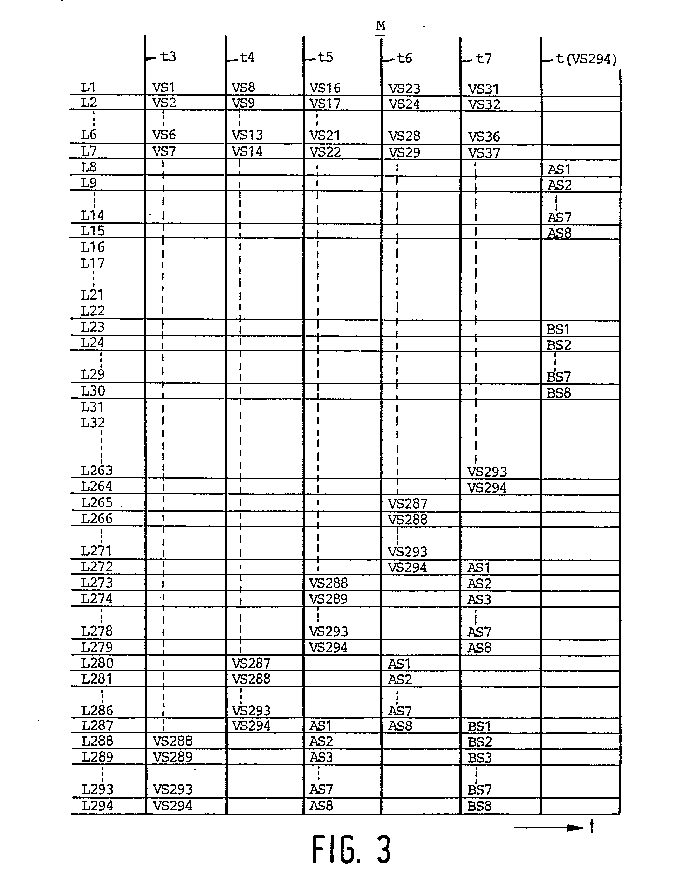

At the instant t3 of the cycle diagram CY of Figure 2 the storage member M has taken over all the scene information from the pick-up member P of the sensor 1 of Figure 1. In Figure 3 a survey is given, as a function of the time t, of the information processing in the storage member M, from the instant t3. In Figure 3, L1, L2 etc. through L294 denote the storage rows L which correspond to television lines L bearing the same numbers. The stored scene information is denoted by VS1, VS2, etc. through VS 294. The instant t3 is assumed to be the instant from which the transfer of the first television line containing the scene information VS1 is started from the storage member M to the parallel-in series-out shift register member SR. This is effected in known manner in a line blanking interval (12 µs) of the line period. The scene information components VS2 through VS 294 arrive in the storage rows L1 through L293. Thereafter the storage row L294 does not contain any information anymore. The transfer information from the storage member M to the register member SR is effected under the control of the clock pulse signal S3 and S4. In the line period the line scanning period (52 µs) follows in which the shift register member SR supplies under the control of the clock pulse signal S5 the recorded scene information VS1 from the output terminal 2.

The same occurs in the subsequent line period, so that the scene information VS2 becomes available at terminal 2, whilst the scene information components VS3 to VS294 are located in the storage rows L1 to L292, the storage rows L294 and L293 not containing information anymore. The transfer of information between the storage rows L is effected at the line frequency, which in the example given in Figure 2 is equal to 15625 Hz.

Whilst from the instant t3 the scene information components VS1 through VS294 of Figure 3 are transferred from the storage member M to the shift register member SR of Figure 1, it follows from Figure 2 that in the subsequent period TAS=7 L the optical path (7) is half-blocked by the shutter 5 shown in Figure 1. From the instant t3 onwards this half-blocking is present to an instant t4. In this situation, light integration which results in the first blocking information occurs in the pick-up member P of the sensor 1. After the pick-up period TAS there occurs, in accordance with the cycle diagram CY, a blocking information-transfer period TF1=8 L, until an instant t5.

As shown in Figure 3, the scene information components VS8 through VS294 are present in the storage member M at the instant t4, the storage rows L288 through L294 no longer containing any information. In accordance with one aspect of the invention, during the blocking information-transfer period TF1 the clock pulse frequency of the signal S1 is a factor of some dozens higher than the clock pulse frequency of the signal S2 which controls the transfer of information from the pick-up member P to the storage member M. As a result thereof, at the first row of pick-up elements in the pick-up member P the information components are added together, as each time after a number of shifts equal to the frequency factor transfer of information is effected between the pick-up member P and the storage member M. A frequency factor equal to forty may serve as an example. This causes the information of forty rows of pick-up elements to arrive in one row of storage elements. Starting from the 15625 Hz line frequency at the information transfer in the storage member M, the transfer frequency in the pick-up member P is 625 kHz. The blocking information originating from the 294 pick-up rows arrives in eight memory rows, it holding that $7 \times 40 + 1 \times 14 = 294$. These blocking information components are denoted by AS1, AS2 to AS8. The blocking

information components AS1 to AS7 are added together from forty pick-up rows, the blocking information AS8 being supplied by fourteen pick-up rows. Figure 3 shows that between the last scene information VS294 and the first blocking information AS1 there are seven memory rows without information.

Choosing the frequency factor to be equal to 40 results in that for a pick-up or light integration period TAS equal to 7 line periods and a partial-blocking operation for half the optical path (7), the intensity of the partial blocking information corresponds to a factor of $\frac{1}{2} \times 7$ L $\times 40 = 140$ L compared to the factor of 274.5 L for the intensity of the scene information. In other words, by choosing the product (280 L) of said frequency factor (40) and the duration of the partial blocking periods (TAS=7 L) to be in the order of magnitude of the scene pick-up period (TVS=274.5 L), adequate partial blocking information is obtained (not more than approximately half the scene information).

As shown in Figure 2, at the instant t5 the second partial blocking information pick-up starts, the shutter 6 of Figure 1 being in the optical path (7) during the pick-up period TBS, as is shown by the signal diagram B. In the manner described for the period TAS, light integration occurs during the period TBS=7 L at the pick-up member P of the sensor 1 to an instant t6 at which a blocking information-transfer period TF2=8 L follows up to an instant t7. Figure 3 shows that at the instant t6 the seven storage rows L288 to L294 do not contain information, whereafter at the instant t7 the storage rows L287 to L294, inclusive are filled with second blocking information components BS1 through BS8. From the cycle diagram CY of Figure 2 it will be obvious that the final instant t7 is the starting instant t1 of the subsequent cycle.

Figure 2 shows that during the field period TV the pick-up member P transfers information three times to the storage member M during pick-up storage transfer periods TF0, TF1 and TF2. Then there are two short blocking information pick-up periods TAS and TBS. For the choice TF0=TF1=TF2=8 L and TAS=TBS=7 L it follows that for the scene information pick-up period TVS 274.5 line periods remain. Compared with the prior art cameras for which it holds that TV=TVS+TF0, it follows that for TF0=8 L 304.5 line periods remain for a scene-pick-up period TVS. An attenuation of the scene information generation having a factor equal to 0.9 corresponds therewith. The attenuation of 10% is permissible.

If the presence of signal smear is allowed, a complete blocking of the optical path (7) during both periods TF1 and TF2 may be omitted. It is then assumed that the two signal smears are in correlation.

From the instant t3 the scene information VS is transferred from the storage member M to the shift register member SR during substantially 294 line periods. In Figure 3, t(VS294) indicates the instant at which scene information VS is not present anymore in the storage member M. The blocking information components AS and BS are then present in the storage rows L8 to L15 and L23 to L30, respectively, the remaining storage rows L not containing information anymore. The instant t(VS294) is located 294—8=302 line periods prior to the instant t2 at which the storage member M in the subsequent cycle will be filled during the period TF0=8 L with the subsequent scene information VS. A period of 10.5 line periods is available for transferring the blocking information components AS and BS from the storage member M. This period of 10.5 line periods is well within the standard field blanking period of 8% of the field period, which in the given example comprises 25 line periods. Sensor 1 applies scene information VS to the terminal 16 during 294 line periods, which causes the field scanning period of 287.5 line periods to be exceeded by 6.5 line periods, which is customary. In accordance with the television standard, the field scanning period starts at the instant t3, which is preceded by the field blanking period of 25 line periods.

As mentioned in the foregoing, 10.5 line periods (0.682 ms) are available, in the field blanking period, for processing the blocking information components AS and BS which are present in part of the thirty storage rows L1 through L30. For this processing operation it is assumed that the shift register member SR is supplying information in the normal manner in the 52 µs line scanning period. The transfer to the shift register member SR from the storage member M may be effected in the 12 µs period (the line blanking period) or in the 1.6 µs period when the clock pulse signal having the frequency of 625 kHz is used. At a sequential transfer from different storage rows L, and an adding operation in the shift register member SR, the transfer has a duration of an integral multiple of 1.6 µs. For the sequential transmission from (not more than) 7 storage rows L a 11.2 µs period is required, which is contained within the 12 µs line blanking period.

Starting from the above numerical values, the blocking information-transfer can be effected within line periods of 64 µs after the instant t(VS294) of Figure 3. Then from the available 672 µs 576 µs is used, 1.5 line periods remains. Within the 12 µs line blanking periods, between 1 and not more than 7 sequential information transfer operations are effected with the aid of the clock pulses (S3 and S4) with the 1.6 µs

period. To illustrate the blocking information-transfer processing operation which was mentioned by way of example, the following Table is given:

| Line period number | Number of transfers | From storage row(s) | Blocking information at output terminal 2 |
|---|---|---|---|
| 1 | 7 | L1—L7 | none |
| 2 | 3 | L8, L9, L10 | AS1+AS2+AS3 |
| 3 | 1 | L11 | AS4 |
| 4 | 3 | L12, L13, L14 | AS5+AS6+AS7 |
| 5 | 7 | L15—L21 | AS8 |
| 6 | 4 | L22—L25 | BS1+BS2+BS3 |
| 7 | 1 | L26 | BS4 |
| 8 | 3 | L27, L28, L29 | BS5+BS6+BS7 |
| 9 | 1 | L30 | BS8 |

In the line blanking period of the line period number 6, the change-over device 19 of Figure 1 is adjusted to the position shown in the drawing. During the line periods 2, 3, 4 and 5 the inputs of the devices 19 and 20 are interconnected. The blocking information components AS delayed by four line periods via the device 20 occurs simultaneously with the blocking information components BS which are comparable therewith. During the comparison effected to determine the extent to which there is signal correlation, weighting factors may play a part, as the intensities of the blocking information components in the line periods 2, 4, 6 and 8; 3 and 7; 5 and 9 are in a ratio of 120:40:14. With the aid of these weighting factors the position in the scene image upon which the focusing operation is effected can be determined, as the blocking information components in the line periods 2, 3, 4 and 5 to 6, 7, 8 and 9, respectively originate from portions of the pick-up member P which are increasingly remote from the storage member M.

Instead of the described partial blocking information processing operation in the numbered line periods and an adding operation in the shift register member SR, an accelerated information processing could be applied in the event of a higher clock pulse frequency.

The above, more detailed description of the construction of the sensor 1 as a frame transfer device operative with the information transfer in the column direction of the pick-up elements in the pick-up member P renders it possible, because of the free choice of said clock pulse frequency factor (for example equal to 40) to add the information components together in the first row of pick-up elements. In the case described, with the subjacent storage member M, without a transfer feature in the column direction of the pick-up elements in the superjacent pick-up member P this adding feature is not present. Two subsequent partial blocking information generating operations may then be considered, each 15 line periods long, after the instant t3 of Figure 2. At the end of both the 15 line periods the information of, for example, the last 8 pick-up element rows are simultaneously transferred to the subjacent, associated storage rows. Then, for the remaining pick-up element rows a reset to the starting point of the integration must be effected. Instead of the blocking information intensity factor of $\frac{1}{2} \times 7$ L$\times 40 = 140$ L calculated for the frame transfer device, a factor of $\frac{1}{2} \times 15$ L 3 7.5 L is not obtained. The aforegoing also applies to the described inter-line transfer device.

For a construction of the camera shown in Figure 1, comprising a plurality of sensors, as used in colour television, it is sufficient to utilize one of the sensors for generating the partial blocking information.

Figure 2 shows one cycle of the field period TV in which the scene information and the two blocking information components are processed by the sensor 1 of Figure 1. Instead thereof, thoughts might go towards one cycle per field period TV in which the scene information is processed and one cycle for processing the blocking information. Thus, during a field period TV there is a cycle with a scene pick-up period, a scene information-transfer period for the transfer of information between the pick-up member and the storage member, at least one pickup period equal to the first or second partial-blocking period, respectively and at least one blocking information-transfer period for the transfer of information between the pick-up member and the storage member. Herein, considered over two field periods TV, the first and second blocking information are processed separately in each field period. This results on the one hand in a larger time difference equal to one field period TV between instants at which the first and second blocking information are obtained and on the other hand in a scene pick-up period TVS of a longer duration than shown in Figure 2. Using the same numerical values for the periods TF1=TF2=8 L and TAS=TBS=7 L, the

7

longer period TVS=289.5 L is obtained. For the said known pick-up period TVS=304.5 this results for the generation of scene information in an attenuation factor equal to 0.95, *i.e.* an attenuation of 5%.

## Claims

1. A signal process in a camera for recording television photographic or cinemato-graphic images, comprising an automatic focusing device, in the process an image of a scene to be recorded being obtained on an opto-electronic sensor *via* an optical lens system, an optical partial blocking device being provided at this lens system for partly blocking an optical path in the lens system, this blocking action being effected on first and second portions of the optical path, which portions are situated in substantially mutually opposite positions on either side of a central axis of the optical path, the camera comprising a signal comparison circuit for comparing the signal supplied by the sensor from an output and generated in first and second partial blocking periods during blocking of the respective first and second optical path portions, the focusing device providing a substantially optimum focusing position depending on the result of the comparison, characterized in that during the duration of a first and a second television field period, the process involves during each field period a cycle with a scene pick-up period, a scene information-transfer period for the transfer of information between a sensor pick-up member and a sensor storage member, at least one pick-up period equal to the first or second partial blocking period, respectively and at least one blocking information-transfer period for the transfer of information between the pick-up member and the storage member, or during the duration of a television field period the process involves a cycle which contains a scene pick-up period, a scene information-transfer period for the transfer of information between the pick-up member and the storage member, a first pick-up period equal to the first partial blocking period, a first blocking information-transfer period for the transfer of information between the pick-up member and the storage member, a second pick-up period equal to the second partial blocking period and a second blocking information-transfer period for the transfer of information between the pick-up member and the storage member.

2. A camera for carrying out the process according to Claim 1, said camera for recording television, photographic or cinemato-graphic images, comprising an automatic focusing device, in the camera an image of a scene to be recorded being obtained on an opto-electronic sensor *via* an optical lens system, an optical partial blocking device being provided at this lens system for partly blocking an optical path in the lens system, this blocking action being effected on first and second portions of the optical path, which portions are situated in substantially mutually opposite positions on either side of a central axis of the optical path, the camera comprising a signal comparison circuit for comparing the signal supplied by the sensor from an output and generated in first and second partial blocking periods during blocking of the respective first and second optical path portions, the focusing device providing a substantially optimum focusing position depending on the result of the comparison, characterized in that, the opto electronic sensor is in the form of a charge transfer device which is suitable for television and comprises a pick-up member, an information storage member and a parallel-in, series out shift register member connected to the sensor output terminal and in that in the camera, which comprises a time signal generator for supplying from several outputs different clock pulses for the transfer of information in and between the members of the sensor, the pick-up member and the storage member are coupled to different clock pulse outputs during the blocking information-transfer periods, the clock pulse frequency for the transfer of information in the pick-up member being a factor of some dozens higher than the clock pulse frequency for the transfer in the storage member and the transfer of information between the pick-up member and the storage member is effected under the control of the clock pulses for the information transfer in the storage member.

3. A camera as claimed in Claim 2, characterized in that the product of said frequency factor and the duration of the first and second pick-up periods, respectively is in the order of magnitude of the scene pick-up period.

4. A camera as claimed in Claim 2 or 3, characterized in that the output terminal of the sensor is coupled to an input of a change-over device having first and second outputs, the first output being coupled to an input of the signal comparison circuit in the camera, the first and second outputs, respectively being connected in the change-over device to the input during predominantly television field scanning.

## Patentansprüche

1. Signalverarbeitung in einer Kamera zum Aufzeichnen von Fernseh-, Photo- oder Filmbildern mit einer automatischen Fokussierungsanordnung, wobei während der Verarbeitung ein Bild einer aufzunehmenden Szene über ein optisches Linsensystem an einem optoelektronischen Sensor erhalten wird, wobei bei diesem Linsensystem eine optische Teilsperrvorrichtung zum teilweisen Sperren einer optischen Strecke in dem Linsensystem vorgesehen ist, wobei diese Teilsperrung bei einem ersten und einem zweiten Teil der optischen Strecke erfolgt, wobei diese Teile einander im wesentlichen auf beiden Seiten einer zentralen Achse der optischen Strecke gegenüberliegen, wobei die Kamera eine Signalvergleichsanordnung aufweist zum Vergleichen des Signals, das von dem Sensor von einem Ausgang geliefert und in einer ersten und zweiten Teilsperrzeit während der Sperrung der ersten bzw.

8

zweiten optischen Streckenteile geliefert wird, wobei die Fokussierungsanordnung je nach dem Vergleichsergebnis eine im wesentlichen optimale Fokuseinstellung schafft, dadurch gekennzeichnet, daß die Verarbeitung während einer ersten und einer zweiten Fernsehteilbildperiode während jeder Teilbildperiode einen Zyklus mit einer Szenenaufnahmeperiode, einer Szeneninformationsübertragungsperiode zur Übertragung von Information zwischen einem Sensor-Aufnahmeelement und einem Sensor-Speicherelement, wenigstens einer Aufnahmeperiode entsprechend der ersten bzw. zweiten Teilsperrperiode und wenigstens eine Sperrinformationsübertragungsperiode zum Übertragen von Information zwischen dem Aufnahmeelement und dem Speicherelement benutzt, oder daß die Verarbeitung während der Dauer einer Fernsehteilbildperiode einen Zyklus benutzt, der eine Szenenaufnahmeperiode, eine Szeneninformationsübertragungsperiode zur Übertragung von Information zwischen dem Aufnahmeelement und dem Speicherelement, eine erste Aufnahmeperiode entsprechend der ersten Teilsperrperiode, eine erste Sperrinformationsübertragungsperiode zur Übertragung von Information zwischen dem Aufnahmeelement und dem Speicherelement, eine zweite Aufnahmeperiode entsprechend der zweiten Teilsperrperiode und eine zweite Sperrinformationsübertragungsperiode zur Übertragung von Information zwischen dem Aufnahmeelement und dem Speicherelement.

2. Kamera zum Durchführen der Verarbeitung nach Anspruch 1, wobei die Kamera zum Aufzeichnen von Fernseh-, Photo- oder Filmbildern mit einer automatischen Fokussierungsanordnung versehen ist, wobei in der Kamera ein Bild einer aufzunehmenden Szene über ein optisches Linsensystem an einem optoelektronischen Sensor erhalten wird, wobei bei diesem Linsensystem eine optische Teilsperrvorrichtung zum teilweisen Sperren einer optischen Strecke in dem Linsensystem vorgesehen ist, wobei diese Sperrung bei einem ersten und einem zweiten Teil der optischen Strecke erfolgt, wobei diese Teile einander im wesentlichen auf beiden Seiten einer zentralen Achse der optischen Strecke gegenüberliegen, wobei die Kamera eine Signalvergleichsanordnung aufweist zum Vergleichen des Signals, das von dem Sensor von einem Ausgang geliefert und in einer ersten und zweiten Teilsperrzeit während der Sperrung der ersten bzw. zweiten optischen Streckenteile geliefert wird, wobei die Fokussierungsanordnung je nach dem Vergleichsergebnis eine im wesentlichen optimale Fokuseinstellung schafft, dadurch gekennzeichnet, daß der optoelektronische Sensor die Form einer Ladungsübertragungsanordnung hat, die für Fernsehen geeignet ist und ein Aufnahmeelement, ein Informationsspeicherelement und ein Parallel-ein-Reihe-aus-Schieberegisterelement aufweist, das mit der Ausgangsklemme des Sensors verbunden ist und daß in der Kamera, die einen Zeitsignalgenerator aufweist zum von mehreren Ausgängen Liefern unterschiedlicher Taktimpulse zur Übertragung von Information in und zwischen den Elementen des Sensors, daß das Aufnahmeelement und as Speicherelement während der Sperrinformationsübertragungsperioden mit verschiedenen Taktimpulsausgängen gekoppelt werden, wobei die Taktimpulsfrequenz zur Übertragung von Information in dem Aufnahmeelement um einen Faktor von einigen zehn höher ist als die Taktimpulsfrequenz zur Übertragung in dem Speicherelement und die Übertragung von Information zwischen dem Aufnahmeelement und dem Speicherelement unter Ansteuerung der Taktimpulse zur Übertragung von Information in dem Speicherelement erfolgt.

3. Kamera nach Anspruch 2, dadurch gekennzeichnet, daß das Produkt aus dem genannten Frequenzfaktor und der Dauer der ersten bzw. zweiten Aufnahmeperiode von der Größenordnung der Aufnahmeperiode der Szene ist.

4. Kamera nach Anspruch 2 oder 3, dadurch gekennzeichnet, daß die Ausgangsklemme des Sensors mit einem Eingang einer Umschaltanordnung mit einem ersten und einem zweiten Ausgang gekoppelt ist, wobei der erste Ausgang mit einer Signalklemme der Kamera gekoppelt ist und der zweite Ausgang mit einem Eingang der Signalvergleichsanordnung in der Kamera gekoppelt ist, wobei in der Umschaltanordnung der erste bzw. zweite Ausgang während im wesentlichen Fernsehteilbildabtastperioden bzw. Bildaustastperioden mit dem Eingang verbunden ist.

**Revendications**

1. Traitement de signaux dans une caméra pour l'enregistrement d'images de télévision, photographiques ou cinématographiques, comprenant un dispositif de focalisation automatique, une image d'une scène à enregistrer étant obtenue, au cours du traitement, sur un capteur opto-électronique, par l'intermédiaire d'un système de lentille optique, un dispositif de blocage partiel optique étant prévu au niveau de ce système de lentille pour bloquer partiellement un trajet optique dans le système de lentille, cette action de blocage étant effectuée sur une première et une seconde partie du trajet optique, ces parties étant situées dans des positions en substance mutuellement opposées, de part et d'autre d'un axe central du trajet optique, la caméra comprenant un circuit de comparaison de signaux pour comparer les signaux fournis par le capteur à partir d'une sortie et générés dans une première et une seconde période de blocage partiel pendant le blocage des première et seconde parties de trajet optique respectives, le dispositif de focalisation fournissant une position de focalisation en substance optimale en fonction du résultat de la comparaison, caractérisé en ce que, pendant la durée d'une première et d'une seconde période de trame de télévision, le traitement implique, pendant chaque période de trame, un cycle présentant une période de captage de scène, une période de transfert d'information de scène pour le transfert d'information entre une section de captage de capteur et une section de stockage de capteur, au moins une période de captage égale à la première ou à la seconde période de blocage partiel, respectivement, et au moins une période de transfert d'information de blocage pour le transfert d'information entre la section de captage et la section de stockage, ou, pendant la durée d'une période de trame de télévision, le traitement implique un cycle qui contient une période de captage de scène, une période de transfert d'information de scène pour le transfert d'information entre la section de captage et la section de stockage, une première période de captage égale à la première période de blocage partiel, une première période de transfert d'information de blocage pour le transfert d'information entre la section de captage et la section de stockage, une seconde période de captage égale à la seconde période de blocage partiel et une seconde période de transfert d'information de blocage pour le transfert d'information entre la section de captage et la section de stockage.

2. Caméra servant à réaliser le traitement suivant la revendication 1, cette caméra, qui est prévue pour l'enregistrement d'images de télévision, photographiques ou cinématographiques, comprenant un dispositif de focalisation automatique, une image d'une scène à enregistrer étant obtenue dans la caméra sur un capteur opto-électronique par l'intermédiaire d'un système de lentille optique, un dispositif de blocage partiel optique étant prévu au niveau de ce système de lentille pour bloquer partiellement un trajet optique dans le système de lentille, cette action de blocage étant effectuée sur une première et sur une seconde partie du trajet optique, et ces parties étant situées dans des positions en substance mutuellement opposées de part et d'autre d'un axe central du trajet optique, la caméra comprenant un circuit de comparaison de signaux pour comparer le signal fourni par le capteur à partir d'une sortie et généré dans des première et seconde périodes de blocage partiel pendant le blocage de la première et de la seconde partie de trajet optique respective, le dispositif de focalisation fournissant une position de focalisation en substance optimale en fonction du résultat de la comparaison, caractérisée en ce que le capteur optoélectronique a la forme d'un dispositif à transfert de charge qui convient pour la télévision et comprend une section de captage, une section de stockage d'information et une section de registre à décalage à entrée parallèle et sortie série connectée à la borne de sortie du capteur, et en ce que dans la caméra, qui comprend un générateur de signaux de temps destiné à fournir, à partir de plusieurs sorties, des impulsions d'horloge différentes pour le transfert d'information dans et entre les sections du capteur, la section de captage et la section de stockage sont couplées à des sorties d'impulsions d'horloge différentes pendant les périodes de transfert d'information de blocage, la fréquence d'impulsions d'horloge pour le transfert d'information dans la section de captage étant supérieure d'un facteur de quelques douzaines à la fréquence d'impulsions d'horloge pour le transfert dans la section de stockage et le transfert d'information entre la section de captage et la section de stockage est effectué sous la commande des impulsions d'horloge pour le transfert d'information dans la section de stockage.

3. Caméra suivant la revendication 2, caractérisée en ce que le produit dudit facteur de fréquence et de la durée de la première et de la seconde période de captage respectivement est de l'ordre de grandeur de la période de captage de scène.

4. Caméra suivant la revendication 2 ou 3, caractérisée en ce que la sortie de la borne de sortie du capteur est couplée à une entrée d'un dispositif de commutation comportant une première et une seconde sortie, la première sortie étant couplée à une borne de signal de la caméra et la seconde sortie étant couplée à une entrée du circuit de comparaison de signaux dans la caméra, la première et la seconde sortie étant respectivement connectées dans le dispositif de commutation à l'entrée pendant des périodes principalement de balayage de trame de télévision et pendant des périodes de suppression de trame, respectivement.

FIG.1

FIG.2

M

| | t3 | t4 | t5 | t6 | t7 | t(VS294) |
|------|------|------|------|------|------|------|
| L1 | VS1 | VS8 | VS16 | VS23 | VS31 | |
| L2 | VS2 | VS9 | VS17 | VS24 | VS32 | |
| ⋮ | | | | | | |
| L6 | VS6 | VS13 | VS21 | VS28 | VS36 | |
| L7 | VS7 | VS14 | VS22 | VS29 | VS37 | |
| L8 | | | | | | AS1 |
| L9 | | | | | | AS2 |
| ⋮ | | | | | | |
| L14 | | | | | | AS7 |
| L15 | | | | | | AS8 |
| L16 | | | | | | |
| L17 | | | | | | |
| ⋮ | | | | | | |
| L21 | | | | | | |
| L22 | | | | | | |
| L23 | | | | | | BS1 |
| L24 | | | | | | BS2 |
| ⋮ | | | | | | |
| L29 | | | | | | BS7 |
| L30 | | | | | | BS8 |
| L31 | | | | | | |
| L32 | | | | | | |
| ⋮ | | | | | | |
| L263 | | | | | VS293 | |
| L264 | | | | | VS294 | |
| L265 | | | | VS287 | | |
| L266 | | | | VS288 | | |
| ⋮ | | | | | | |
| L271 | | | | VS293 | | |
| L272 | | | | VS294 | AS1 | |
| L273 | | | VS288 | | AS2 | |
| L274 | | | VS289 | | AS3 | |
| ⋮ | | | | | | |
| L278 | | | VS293 | | AS7 | |
| L279 | | | VS294 | | AS8 | |
| L280 | | VS287 | | AS1 | | |
| L281 | | VS288 | | AS2 | | |
| ⋮ | | | | | | |
| L286 | | VS293 | | AS7 | | |
| L287 | | VS294 | AS1 | AS8 | BS1 | |
| L288 | VS288 | | AS2 | | BS2 | |
| L289 | VS289 | | AS3 | | BS3 | |
| ⋮ | | | | | | |
| L293 | VS293 | | AS7 | | BS7 | |
| L294 | VS294 | | AS8 | | BS8 | |

⟶ t

FIG. 3